# EUROPEAN PATENT APPLICATION

(11) **EP 4 841 841 A1**
(43) Date of publication of application: **18.11.2026**
(21) Application number: 26175495.6
(22) Date of filing: 29.04.2026
(51) Int. Cl.: H02H 3/087, H01H 39/00

(54) **HYBRID PROTECTION DEVICE AND CONTROL METHOD THEREOF**

(30) Priority: 14.05.2025 CN 202510618783
(71) Applicant: ABB E-mobility B.V., 2629 JG Delft (NL)
(72) Inventor: ZHANG, Felix-Fan, Shenzen 518118 (CN); YUEN, Ken-KuenFaat, Hong Kong, 000000 (CN)
(74) Representative: Zimmermann & Partner Patentanwälte mbB

(57) **Abstract**

A hybrid protection device and a control method thereof. The invention provides a hybrid protection device, comprising: a main branch including a main pyro-fuse; an auxiliary branch, which is connected in parallel with the main branch and comprises an auxiliary pyro-fuse and a resistor, wherein the auxiliary pyro-fuse is connected in series with the resistor; and a control unit including a pyro-trigger configured to trigger the main pyro-fuse and the auxiliary pyro-fuse. A method for controlling the hybrid protection device is also provided. Through the technical solution of the embodiments of the invention, a hybrid protection device is provided, so as to improve the breaking capacity of the pyro-fuse in a reliable, low-cost and miniaturized way.

## Description

### Technical Field

The application relates to the field of power equipment, and more specifically, relates to a hybrid protection device and a control method thereof.

### Background

With the improvement of social environmental awareness and the requirement of carbon neutrality in recent years, electric vehicles have entered a stage of rapid development. Because the instantaneous impulse current of electric vehicle is relatively large under the condition of rapid acceleration, the traditional fuse cannot protect it well. Instead of traditional fuses, pyro-fuse has become the core safety component of high-voltage battery pack of electric vehicles, which is mainly used to quickly cut off fault current and prevent the risk of thermal runaway caused by collision, short circuit or overcurrent. In addition, in the field of grid-level energy storage and household energy storage, pyro-fuse can ensure the safety of electrochemical energy storage system in case of short circuit or thermal runaway via fusing technology with high breaking capability.

With the increasing popularity of pyro-fuses in direct current (DC) systems such as battery management system and energy storage system of electric vehicles, it is increasingly important to improve the breaking capability of pyro-fuses. Generally speaking, it is unsafe to use pyro-fuses beyond the specified breaking capacity. For example, if the current passing through the pyro-fuse exceeds the breaking capacity of the pyro-fuse, the pyro-fuse may explode when cutting off the current. Generally speaking, in order to improve the breaking capacity of the pyro-fuses, it is necessary to increase the size of pyro-fuses or customize special pyro-fuses to manufacturers. However, this greatly increases the cost and size of the device.

Therefore, a reliable, low-cost and miniaturized approach to improve the breaking capacity of the pyro-fuse is needed.

### Summary

In view of this, the present invention provides a hybrid protection device to improve the breaking capacity of the pyro-fuse in a reliable, low-cost and miniaturized way.

Aspects and advantages of the invention will be set forth partially in the following description, or may be obvious from the description, or may be learned by the practice of the invention.

On the one hand, the invention provides a hybrid protection device, comprising: a main branch including a main pyro-fuse; an auxiliary branch, which is connected in parallel with the main branch and comprises an auxiliary pyro-fuse and a resistor, wherein the auxiliary pyro-fuse is connected in series with the resistor; and a control unit including a pyro-trigger configured to trigger the main pyro-fuse and the auxiliary pyro-fuse.

According to an additional or alternative embodiment, the control unit comprises a time delay unit configured to generate a delay so that the pyro-trigger triggers the main pyro-fuse and the auxiliary pyro-fuse at intervals of the delay.

According to an additional or alternative embodiment, the delay is set such that after the main pyro-fuse is turned off, the current flowing through the main branch is diverted to the auxiliary branch, and when the current flowing through the auxiliary branch drops to a threshold, the auxiliary pyro-fuse is turned off.

According to an additional or alternative embodiment, the control unit further comprises an overcurrent protection source module configured to receive a sensing signal from a current sensor and cause the pyro-trigger to trigger the main pyro-fuse and the auxiliary pyro-fuse in response to the received sensing signal.

According to an additional or alternative embodiment, the control unit further comprises an external source module configured to cause the pyro-trigger to trigger the main pyro-fuse and the auxiliary pyro-fuse in response to a signal from an external controller.

According to an additional or alternative embodiment, the main branch further comprises one or more additional main pyro-fuses, which are connected in parallel with the main pyro-fuses, and wherein the pyro-trigger is configured to trigger the one or more additional primary pyro-fuses.

According to an additional or alternative embodiment, the auxiliary branch further comprises a capacitor connected in parallel with the resistor in the auxiliary branch.

On the other hand, the invention provides a method for controlling a hybrid protection device, comprising: determining that a triggering event is reached; triggering a main pyro-fuse in response to determining that the triggering event is achieved, wherein the main pyro-fuse is arranged in a main branch; and triggering an auxiliary pyro-fuse in response to determining that the triggering event is achieved, wherein the auxiliary pyro-fuse is arranged in the auxiliary branch; wherein the main branch and the auxiliary branch are arranged in parallel, and wherein the auxiliary branch further comprises a resistor, and the auxiliary pyro-fuse is connected in series with the resistor.

According to an additional or alternative embodiment, the method includes triggering the main pyro-fuse and the auxiliary pyro-fuse at intervals of a delay.

According to an additional or alternative embodiment, the delay is set such that after the main pyro-fuse is turned off, the current flowing through the main branch is diverted to the auxiliary branch, and when the current flowing through the auxiliary branch drops to a threshold, the auxiliary pyro-fuse is turned off.

According to an additional or alternative embodiment, determining that a triggering event is reached comprises receiving a sensing signal from a current sensor; and determining that a triggering event is reached in response to the received sensing signal.

According to an additional or alternative embodiment, determining that a triggering event is reached comprises determining that a triggering event is reached in response to a signal from an external controller.

According to an additional or alternative embodiment, the method further comprises triggering one or more additional main pyro-fuses in the main branch in response to determining that a triggering event is reached, the one or more additional main pyro-fuses being connected in parallel with the main pyro-fuses.

According to an additional or alternative embodiment, the auxiliary branch further comprises a capacitor connected in parallel with the resistor in the auxiliary branch.

### Brief Description of the Drawings

In order to more clearly explain the technical solution in the embodiments of the present invention, exemplary embodiments will be described below with reference to the accompanying drawings, wherein like reference numerals denote like parts. It is obvious that the drawings in the following description are only some embodiments of the present invention, in which:
Figs. 1A and 1B are schematic views of the working principle of a pyro-fuse;
Fig. 2 is a schematic diagram of a hybrid protection device according to an embodiment of the present invention;
Fig. 3 is a schematic diagram of a hybrid protection device according to another embodiment of the present invention;
Fig. 4 is a schematic diagram of the engineering implementation of a hybrid protection device according to an embodiment of the present invention;
Fig. 5 is a schematic diagram of the operation flow of a hybrid protection device according to an embodiment of the present invention;
Fig. 6 is a flowchart of a method for controlling a hybrid protection device according to an embodiment of the present invention;
Figs. 7A and 7B are schematic diagrams of a simulation experiment of a hybrid protection device according to an embodiment of the present invention;
Figs. 8A and 8B are schematic diagrams of a physical test of the hybrid protection device according to the embodiment of the present invention.

### Detailed Description of Embodiments

The preferred embodiments of the present invention will be described below with reference to the drawings in the specification. It should be understood that the preferred embodiments described herein are only used to illustrate and explain the present invention, and are not used to limit the present invention, and the embodiments in the present invention and the features in the embodiments can be combined with each other without conflict.

The described features, structures, or characteristics may be combined in any suitable manner in one or more embodiments. In the following description, numerous specific details are provided to give a thorough understanding of embodiments of the present invention. However, those skilled in the art will realize that the technical solution of the present invention can be practiced without one or more of the specific details, or other methods, components, devices, steps and so on can be adopted. In other instances, well-known methods, devices, implementations or operations are not shown or described in detail to avoid obscuring aspects of the present invention.

The block diagrams shown in the drawings are only functional entities, and do not necessarily correspond to physically independent entities. That is, these functional entities may be implemented in the form of software, or in one or more hardware modules or integrated circuits, or in different processor devices and/or microcontroller devices.

The flow charts shown in the drawings are only illustrative, and do not necessarily include all contents and operations/steps, nor do they have to be executed in the described order, unless explicitly stated. For example, some operations/steps can be decomposed, while others can be merged or partially merged, so the actual execution order may change according to the actual situation.

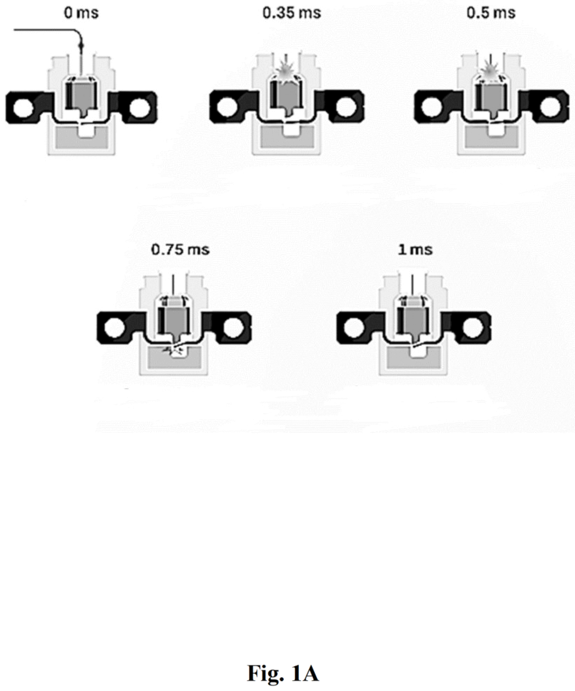

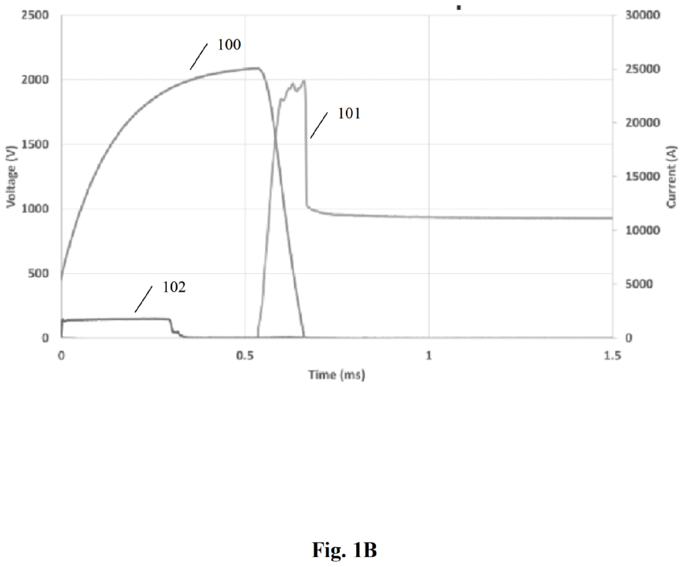

Figs. 1A and 1B are schematic views of the working principle of a pyro-fuse. Pyro-fuse (also called pyro-switch interchangeably) is a kind of protection device which integrates pyrotechnic disconnect structure and fuse-like arc extinguishing structure. When the circuit is in a normal state, the pyrotechnic disconnect structure keeps both ends conducting; and when short circuit or other triggering events occur, the pyro-triggering signal appears, and the pyrotechnic disconnect structure is detonated and the two ends are kept disconnected. Then the arc extinguishing structure begins to absorb all the arc energy at both ends of the circuit. The amount of breaking energy (for example, arc energy) that pyro-fuse can absorb reflects the breaking capacity of the pyro-fuse.

Fig. 1A shows the working principle of the pyro-fuse after being triggered in time sequence. Those skilled in the art should understand that the time described below is exemplary and not limiting. As shown in Fig. 1A, at 0 ms, for example, a control unit (such as an electronic control unit (ECU) and a battery management system (BMS)) sends a trigger signal to the pyro-fuses. At about 0.35 ms, for example, in response to the trigger signal, the pyrotechnic disconnect structure is detonated and the pyrotechnic energy is released. At about 0.5 ms, for example, the pyrotechnic energy pushes the piston to hit the bus bar. At about 0.75 ms, for example, the bus bar is cut and an arc is generated. At about 1 ms, for example, the arc is absorbed by the arc extinguishing structure and the current is interrupted.

Fig. 1B shows the current and voltage of the pyro-fuse at various times corresponding to the process shown in Fig. 1A. As shown in Fig. 1B, curve 100 is the current flowing through the pyro-fuse, curve 101 is the voltage across the pyro-fuse, and curve 102 is the trigger signal. As shown in Fig. 1B, the pyro-fuse is triggered at about 0.35 ms (as shown by curve 102). At about 0.75 ms, a large amount of arc current is generated (as shown by curve 100). It can be seen that when the pyro-fuse is triggered, it will generate a lot of breaking energy (for example, arc energy) in a very short time (usually about hundreds of microseconds or less than one millisecond). This means that in order to operate safely, pyro-fuses that can absorb a lot of breaking energy are needed. That is to say, in order to operate safely, it is necessary to improve the breaking capacity of the pyro-fuse.

As mentioned above, the amount of the breaking energy absorbed by the pyro-fuse reflects the breaking capacity of the pyro-fuse, so in order to improve the breaking capacity, it can be considered to reduce the breaking energy passing through the pyro-fuse in a very short time (usually about hundreds of microseconds or less than one millisecond) in an appropriate way.

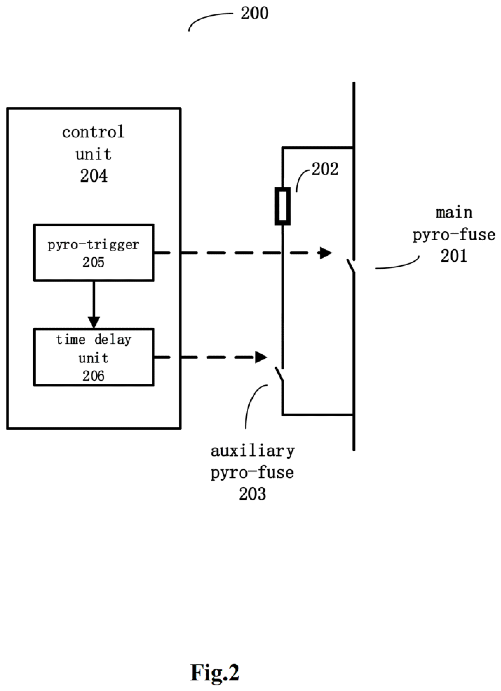

Fig. 2 is a schematic diagram of a hybrid protection device according to an embodiment of the present invention. As shown, the hybrid protection device 200 includes a main branch. The main branch includes a main pyro-fuse 201. The main pyro-fuse 201 can be any existing or future pyro-fuse, such as high voltage fuse, medium voltage fuse, low voltage fuse, blasting trigger fuse and linkage fuse.

As shown in Fig. 2, the hybrid protection device 200 further includes an auxiliary branch connected in parallel with the main branch. The auxiliary branch includes a resistor 202 and an auxiliary pyro-fuse 203. Because of the resistor 202 in the auxiliary branch, when the main pyro-fuse 201 in the main branch is turned off, the current flowing through the main pyro-fuse 201 will be guided to the parallel auxiliary branch, thus limiting the current flowing through the main pyro-fuse 201. In addition to the diversion function, the resistor 202 can also consume a lot of breaking energy generated in the circuit system when the main pyro-fuse 201 is turned off, so as to reduce the current flowing through the auxiliary branch and protect the circuit system. The auxiliary pyro-fuse 203 is connected in series with the resistor 202. After being triggered, the auxiliary pyro-fuse 203 can disconnect the auxiliary branch to ensure that the circuit system is truly completely disconnected. In addition, the auxiliary pyro-fuse can also be turned off in time to protect the resistor 202, so as to prevent the resistor 202 from being damaged by the breaking energy, thereby protecting the whole circuit system. The auxiliary pyro-fuse 203 may be the same as the main pyro-fuse 201. The auxiliary pyro-fuse 203 may also be different from the main pyro-fuse 201, for example, in breaking capacity, response time and so on.

As shown in Fig. 2, the hybrid protection device 200 further includes a control unit 204. The control unit 204 may include a pyro-trigger 205. The pyro-trigger 205 is configured to generate and send trigger signals to the main pyro-fuse 201 and the auxiliary pyro-fuse 203 so as to trigger the two pyro-fuses 201, 203.

Optionally, in an alternative embodiment, the control unit 204 may further include a time delay unit 206. The time delay unit 206 may be configured to generate a delay, and the pyro-trigger 205 triggers the main pyro-fuse 201 and the auxiliary pyro-fuse 203 at intervals of the delay. In one embodiment, it is necessary to first trigger the main pyro-fuse 201 so that the current flowing through the main branch after the main branch is disconnected is directed to the auxiliary branch to protect the main pyro-fuse 201 and even the whole circuit system, and then trigger the auxiliary pyro-fuse 203 to ensure that the circuit is truly disconnected and further protect the circuit system. In this case, the delay cannot be too short, otherwise the current flowing through the main branch cannot be sufficiently guided to the auxiliary branch after the main pyro-fuse 201 is turned off. The delay should not be too long, otherwise the circuit system may not be turned off in time, resulting in the damage of the resistor 202 in the auxiliary branch circuit due to long-term heating by high current, and even the damage of the whole circuit system. Therefore, it is necessary to trigger the auxiliary pyro-fuse 203 when the resistor 202 limits the current flowing through the auxiliary branch to a certain threshold. The delay may be predetermined or determined by the computing unit or the processing unit during the operation. Since the main pyro-fuse 201 and the auxiliary pyro-fuse 203 may be different in response time and the like, the setting of the delay may change. In an alternative embodiment, since the main pyro-fuse 201 and the auxiliary pyro-fuse 203 may be different in response time and the like, it may be necessary to trigger the auxiliary pyro-fuse 203 first and then the main pyro-fuse 201 or trigger the main pyro-fuse 201 and the auxiliary pyro-fuse 203 at the same time. In a word, the delay can be determined such that after the main pyro-fuse 201 is turned off, the current flowing through the main branch is fully diverted to the auxiliary branch, and when the current flowing through the auxiliary branch drops to a threshold, the auxiliary pyro-fuse 203 is turned off.

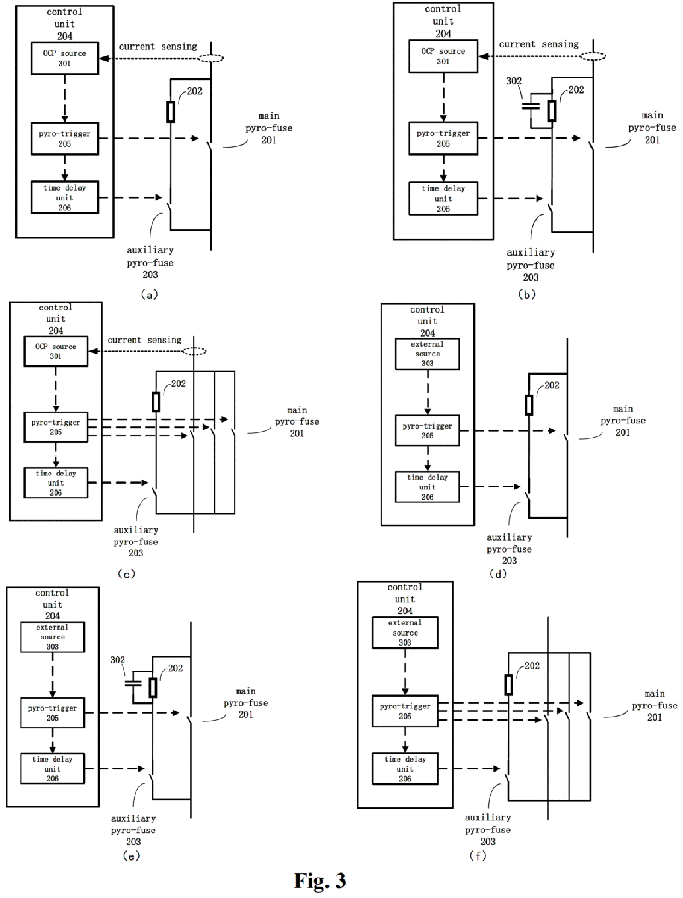

Fig. 3 is a schematic diagram of a hybrid protection device according to another embodiment of the present invention. Fig. 3 shows various alternative structures of the hybrid protection device. Those skilled in the art should understand that Figure 3 is only illustrative, not restrictive, and the structures described in Figure 3 and features in the structures can be combined with each other without conflict. For the sake of simplicity, the same elements in Fig. 3 as those in Fig. 2 are not described here.

As shown in the structure (a) in Fig. 3, the control unit 204 of the hybrid protection device 200 shown in Fig. 2 may further include an overcurrent protection (OCP) source module 301. The overcurrent protection source module 301 is configured to receive a sensing signal from a current sensor and initiate the triggering of the main pyro-fuse 201 and the auxiliary pyro-fuse 203 by the pyro-trigger 205 in response to the received sensing signal. That is, when the current sensor in the bus senses a large current, the overcurrent protection source module can initiate the triggering of two pyro-fuses 201 and 203.

The structure (b) in Fig. 3 is different from the structure (a) in that the auxiliary branch of the structure (b) further includes a capacitor 302, which is arranged in parallel with the resistor 202. As mentioned above, when the main pyro-fuse 201 is turned off, the auxiliary branch will instantly introduce a large amount of current, which will cause the voltage across the resistor 202 to be extremely high. The parallel capacitor 302 can make a large amount of current flow through the capacitor 302, which plays a good buffering role to avoid excessive current when the main pyro-fuse 201 is turned off.

The structure (c) in Fig. 3 is different from the structure (a) in that the main branch of the structure (c) includes a plurality of main pyro-fuses 201 connected in parallel. These main pyro-fuses 201 may be the same as or different from each other and are all controlled by the control unit 204. The relationships between these main pyro-fuses 201 and the auxiliary pyro-fuses are the same as the relationship between the single main pyro-fuse 201 and the auxiliary pyro-fuse described in Fig. 2, and will not be described in detail here.

Structures (d), (e) and (f) in Fig. 3 are similar to structures (a), (b) and (c) respectively. For the sake of brevity, the same elements are not repeated here. The difference between them is that the control units of structure (d), structure (e) and structure (f) include an external source module 303. The external source module 303 may receive a control signal from an external controller, for example, and initiate the triggering of the primary pyro-fuse 201 and the secondary pyro-fuse 203 in response to the signal. That is, the hybrid protection device 200 can not only use a closed-loop trigger circuit (including a current sensor and an overcurrent protection source module, for example), but also use an external controller to trigger the pyro-fuses.

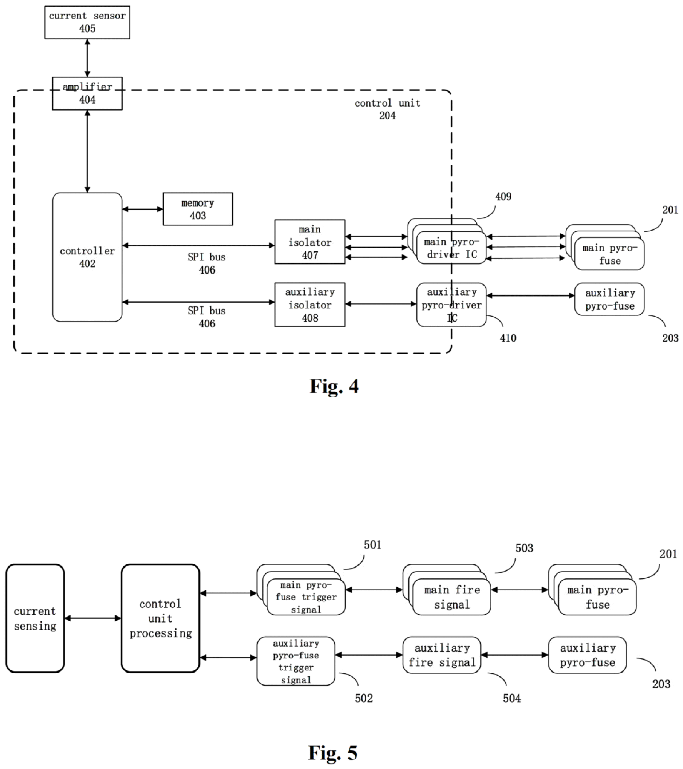

Fig. 4 is a schematic diagram of the engineering implementation of a hybrid protection device according to an embodiment of the present invention. As should be understood by those skilled in the art, the engineering implementation shown in Figure 4 is only one embodiment of the present invention, which is only used for illustration and not for limitation. As shown in Fig. 4, the hybrid protection device may include a control unit 204. The control unit 204 may include a controller 402, which may be a central processing unit (CPU), a digital signal processor (DSP) or any other suitable processing device. The control unit 204 may also include a memory 403 coupled to the controller 402. The memory 403 may be an electrically erasable programmable read-only memory (EEPROM) or any other suitable memory. The control unit 204 also includes an isolate amplifier 404 coupled to the controller 402. The isolate amplifier 404 receives the sensing signal from the current sensor 405, amplifies it and forwards it to the controller 402. In addition, the controller 402 is also coupled to a main isolator 407 and an auxiliary isolator 408 through a serial peripheral interface (SPI) bus 406. The main isolator 407 and the auxiliary isolator 408 are used to isolate the control signal to avoid confusion. In addition, the hybrid protection device also includes a main pyro-driver integrated circuit (IC)409 and an auxiliary pyro-driver IC 410. The main pyro-driver IC 409 and the auxiliary pyro-driver IC 410 are used to trigger the main pyro-fuse 201 and the auxiliary pyro-fuse 203, respectively.

Fig. 5 is a schematic diagram of the operation flow of a hybrid protection device according to an embodiment of the present invention. As should be understood by those skilled in the art, Fig. 5 is only one embodiment of the present invention, which is only for illustration and not for limitation. As shown in Fig. 5, for example, the current sensor in the circuit bus senses the current and sends the sensing signal to the control unit 204 (for example, the OCP source module 301 in the control unit 204). For example, the OCP source module 301 processes the sensing signal and also determines whether it is necessary to trigger the pyro sensor. If a trigger is required, a main pyro-driver trigger signal 501 and an auxiliary pyro-driver trigger signal 502 are sent, which can be received by the pyro-trigger 205 as shown in Fig. 2 or modules or devices such as the main pyro-driver IC 409 and the auxiliary pyro-driver IC 410 as shown in Fig. 4. After receiving the corresponding pyro-driver trigger signal, the pyro-trigger 205 or the main pyro-driver IC 409 and the auxiliary pyro-driver IC 410 send the main fire signal 503 and the auxiliary fire signal 504 to the main pyro-fuse 201 and the auxiliary pyro-fuse 203 respectively, so as to trigger the corresponding pyro-fuses 201 and 203 respectively.

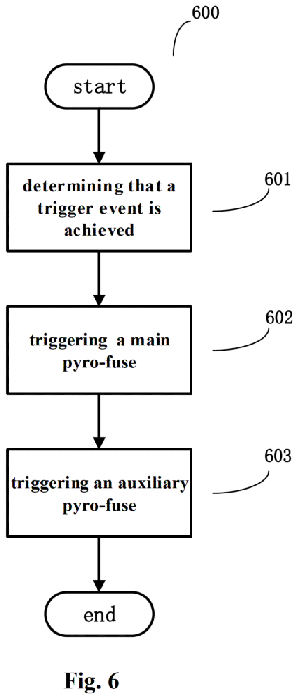

Fig. 6 is a flowchart of a method 600 for controlling a hybrid protection device according to an embodiment of the present invention. As shown in Fig. 6, at step 601, determining that a trigger event is achieved. In one embodiment, determining that a trigger event is achieved includes receiving a sensing signal from a current sensor in the bus. In response to the received sensing signal (for example, the current in the bus is too large), it is determined that the trigger event is reached. In another embodiment, determining that a trigger event is achieved includes determining that a trigger event is achieved in response to a control signal from an external controller. That is, the hybrid protection device 200 can be controlled by an external controller. At step 602, the main pyro-fuse 201 is triggered in response to determining that a trigger event is reached. At step 603, the auxiliary pyro-fuse 203 is triggered in response to determining that the trigger event is reached. As discussed above, the order between step 602 and step 603 may be changed or may occur simultaneously. The delay between step 602 and step 603 can be determined such that the current flowing through the main branch is fully diverted to the auxiliary branch after the main pyro-fuse 201 is turned off, and when the current flowing through the auxiliary branch drops to a threshold, the auxiliary pyro-fuse 203 is turned off. The delay may be predetermined or determined by the computing unit or the processing unit during the operation.

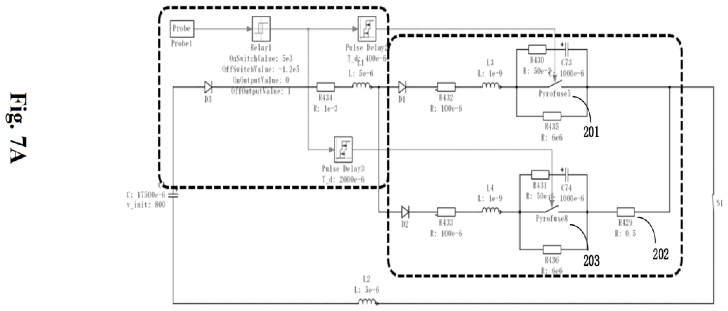

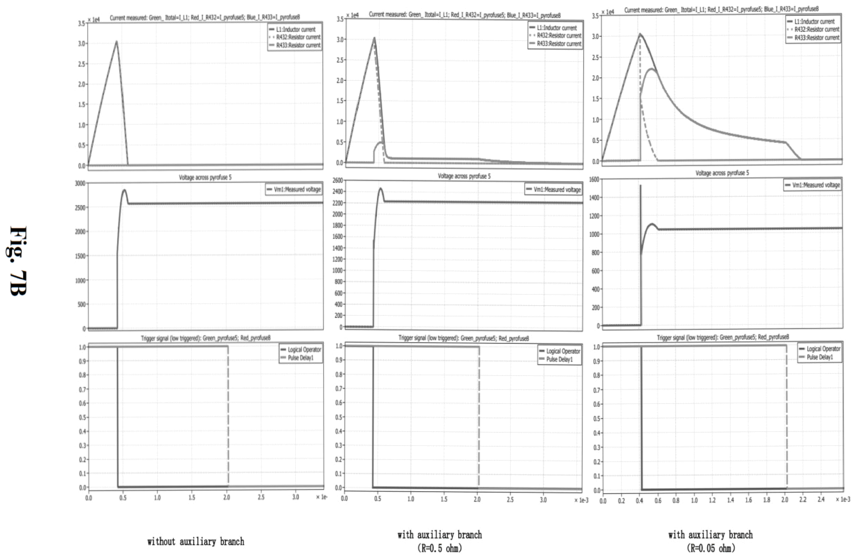

Figs. 7A and 7B are schematic diagrams of a simulation experiment of a hybrid protection device according to an embodiment of the present invention. Fig. 7A is a setup circuit structure of a simulation experiment of a hybrid protection device. It can be understood that the circuit structure shown in Fig. 7A is for illustration purposes only, and not for limitation purposes. As shown in Fig. 7A, the simulation experiment set up a main branch and an auxiliary branch, wherein the main branch includes a main pyro-fuse 201 (Pyrofuse5), and the auxiliary branch includes an auxiliary pyro-fuse 203 (Pyrofuse8) and a resistor 202 (R429) connected in series. Fig. 7B shows the results of the simulation experiment of the hybrid protection device. Fig. 7B shows three cases: there is no auxiliary branch, there is an auxiliary branch with a resistance of 0.5 ohm and there is an auxiliary branch with a resistance of 0.05 ohm. For each case, three graphs are shown, in which the curves in the upper graph respectively show the total current passing through the main branch and the auxiliary branch, the current passing through the main branch and the current passing through the auxiliary branch, wherein the dashed line is the current passing through the main branch. The middle graphs show the voltage across the main pyro-fuse 201. The bottom graphs show the signals that trigger the main pyro-fuse 201 and the auxiliary pyro-fuse 203 respectively. As can be seen from the graphs, there is a delay between them.

As discussed above, the breaking energy can be calculated as: $Es = {\int }_{0}^{Ts} U \left(t\right) ∗ I \left(t\right) dt$ where Ts is the duration of the pyro-fuse breaking.

As shown in Fig. 7B, when the auxiliary branch exists, the breaking current and/or breaking voltage and/or breaking time of the main pyro-fuse are significantly reduced after it is triggered, which means that the breaking energy is significantly reduced. For example, the breaking energy can be calculated by the curve in Fig. 7B: when there is no auxiliary branch, it is about 6084 Joules, when there is an auxiliary branch with a resistance of 0.5 ohm, it is about 4167 Joules, and when there is an auxiliary branch with a resistance of 0.05 ohm, it is about 1017 Joules. Therefore, as can be seen from Fig. 7B, during arc extinguishing, the total breaking current is divided into two parts, one part flows through the main pyro-fuse 201 and the other part flows through the auxiliary pyro-fuse 203. When the resistance of the resistor 202 in the auxiliary branch is smaller, the current in the main pyro-fuse is smaller, and the breaking energy is smaller.

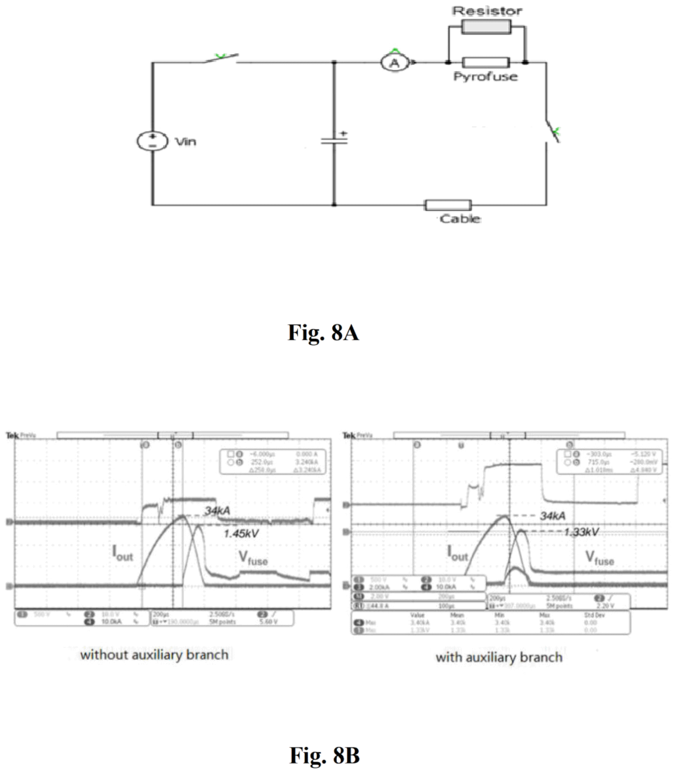

Figs. 8A and 8B are schematic diagrams of a physical test of the hybrid protection device according to the embodiment of the present invention. Fig. 8A is a circuit diagram of the test hybrid protection device. It can be understood that the circuit diagram shown in Fig. 8A is for illustration purposes only and not for limitation purposes. As shown in Fig. 8, the test circuit includes a main branch with a main pyro-fuse and an auxiliary branch with a resistor. Fig. 8B shows the test results of the hybrid protection device. As shown in Fig. 8B, when the auxiliary branch exists, the breaking current and/or breaking voltage of the main pyro-fuse are significantly reduced after it is triggered, which means that the breaking energy is significantly reduced.

It should be understood that the terms "including", "comprising" or any other variation thereof are intended to cover non-exclusive inclusion, so that a process, method or device including a series of elements includes not only those elements, but also other elements not explicitly listed or elements inherent to such process, method or device.

It should be understood that the terms "system", "unit" or "module" as used herein may include hardware and/or software systems for performing one or more functions. For example, a module, unit, or system may include a computer processor, controller, or other logic-based device that performs operations according to instructions stored on tangible and non-transitory computer-readable storage media, such as computer memory. Alternatively, a module, unit or system may include a hardwired device that performs operations based on the hardwired logic of the device. The various modules or units shown in the drawings may represent hardware that operates according to software or hardwired instructions, software that directs the hardware to perform operations, or a combination thereof.

It should be understood that many varied features and configurations described above with respect to several exemplary embodiments can be further selectively applied to form other possible embodiments of the present invention. For the sake of brevity, and in consideration of the abilities of those skilled in the art, not all possible embodiments are provided or discussed in detail, although all combinations of embodiments and possible embodiments or others contained in the appended claims are intended to be part of the present invention. In addition, from the above description of several exemplary embodiments of the present invention, those skilled in the art will recognize improvements, changes and modifications. Such improvements, changes and modifications within the skill of the art are also intended to be covered by the claims. In addition, it should be obvious that the foregoing only relates to the described embodiments of the invention, and numerous changes and modifications can be made herein without departing from the spirit and scope of the invention as defined by the claims and their equivalents.

## Claims

1. A hybrid protection device (200), comprising:
a main branch including a main pyro-fuse (201);
an auxiliary branch, which is connected in parallel with the main branch and
comprises an auxiliary pyro-fuse (203) and a resistor (202), wherein the auxiliary pyro-fuse (203) is connected in series with the resistor (202); and
a control unit (204) including a pyro-trigger (205) configured to trigger the main pyro-fuse (201) and the auxiliary pyro-fuse (203).

2. The hybrid protection device (200) according to claim 1, wherein the control unit (204) comprises a time delay unit (206) configured to generate a delay so that the pyro-trigger (205) triggers the main pyro-fuse (201) and the auxiliary pyro-fuse at intervals of the delay.

3. The hybrid protection device (200) according to claim 2, wherein the delay is set such that after the main pyro-fuse (201) is turned off, the current flowing through the main branch is diverted to the auxiliary branch, and when the current flowing through the auxiliary branch drops to a threshold, the auxiliary pyro-fuse (203) is turned off.

4. The hybrid protection device (200) according to any of claims 1 to 3, wherein the control unit (204) further comprises an overcurrent protection source module (301) configured to receive a sensing signal from a current sensor and cause the pyro-trigger (205) to trigger the main pyro-fuse (205) and the auxiliary pyro-fuse (203) in response to the received sensing signal.

5. The hybrid protection device (200) according to any of claims 1 to 4, wherein the control unit (204) further comprises an external source module (303) configured to cause the pyro-trigger (205) to trigger the main pyro-fuse (201) and the auxiliary pyro-fuse (203) in response to a signal from an external controller.

6. The hybrid protection device (200) according to any of claims 1 to 5, wherein the main branch further comprises one or more additional main pyro-fuses, which are connected in parallel with the main pyro-fuses, and
wherein the pyro-trigger is configured to trigger the one or more additional primary pyro-fuses.

7. The hybrid protection device (200) according to any of claims 1 to 6, wherein the auxiliary branch further comprises a capacitor (302) connected in parallel with the resistor (202) in the auxiliary branch.

8. A method (600) for controlling a hybrid protection device, comprising:
determining (601) that a triggering event is reached;
triggering (602) a main pyro-fuse (201) in response to determining that the triggering event is achieved, wherein the main pyro-fuse (201) is arranged in a main branch; and
triggering (603) an auxiliary pyro-fuse (203) in response to determining that the triggering event is achieved, wherein the auxiliary pyro-fuse (203) is arranged in the auxiliary branch;
wherein the main branch and the auxiliary branch are arranged in parallel, and
wherein the auxiliary branch further comprises a resistor (202), and the auxiliary pyro-fuse (203) is connected in series with the resistor (202).

9. The method (600) according to claim 8, comprising:
triggering the main pyro-fuse (201) and the auxiliary pyro-fuse (203) at intervals of a delay.

10. The method (600) according to claim 9, wherein the delay is set such that after the main pyro-fuse (201) is turned off, the current flowing through the main branch is diverted to the auxiliary branch, and when the current flowing through the auxiliary branch drops to a threshold, the auxiliary pyro-fuse (203) is turned off.

11. The method (600) according to any of claims 8 to 10, wherein determining that a triggering event is reached comprising:
receiving a sensing signal from a current sensor; and
determining that a triggering event is reached in response to the received sensing signal.

12. The method (600) according to any of claims 8 to 11, wherein determining that a triggering event is reached comprising:
determining that a triggering event is reached in response to a signal from an external controller.

13. The method (600) according to any of claims 8 to 12, further comprising:
triggering one or more additional main pyro-fuses in the main branch in response to determining that a triggering event is reached, the one or more additional main pyro-fuses being connected in parallel with the main pyro-fuses.

14. The method (600) according to any of claims 8 to 13, wherein the auxiliary branch further comprises a capacitor (302) connected in parallel with the resistor (202) in the auxiliary branch.
